Europäisches Patentamt

European Patent Office

Office européen des brevets

(11) Veröffentlichungsnummer : **0 411 003 B1**

(12) **EUROPÄISCHE PATENTSCHRIFT**

(45) Veröffentlichungstag der Patentschrift :
**02.12.92 Patentblatt 92/49**

(21) Anmeldenummer : **89904773.2**

(22) Anmeldetag : **27.04.89**

(86) Internationale Anmeldenummer :
**PCT/DE89/00270**

(87) Internationale Veröffentlichungsnummer :
**WO 89/10243 02.11.89 Gazette 89/26**

(51) Int. Cl.⁵ : **B25J 15/06**, B25J 9/10

(54) **GREIFVORRICHTUNG.**

(30) Priorität : **29.04.88 DE 3814617**

(43) Veröffentlichungstag der Anmeldung :
**06.02.91 Patentblatt 91/06**

(45) Bekanntmachung des Hinweises auf die
Patenterteilung :
**02.12.92 Patentblatt 92/49**

(84) Benannte Vertragsstaaten :
**AT BE CH DE FR GB IT LI LU NL SE**

(56) Entgegenhaltungen :
**GB-A- 862 174**
**US-A- 4 610 475**
**US-A- 4 765 139**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**W-8000 München 19 (DE)**

(72) Erfinder : **BENECKE, Wolfgang**
**Sigismundstrasse 5**
**W-1000 Berlin 30 (DE)**
Erfinder : **RIETHMÜLLER, Werner**
**Wilhelmshavener Str. 24**
**W-1000 Berlin 21 (DE)**

(74) Vertreter : **Münich, Wilhelm, Dr. et al**
**Kanzlei Münich, Steinmann, Schiller**
**Willibaldstrasse 36/38**
**W-8000 München 21 (DE)**

EP 0 411 003 B1

## Beschreibung

Die Erfindung betrifft eine Greifvorrichtung, mit einem Grundkörper und Greifelementen. Solche Greifvorrichtungen finden z.B. in der Robotertechnik Verwendung und werden in einer Vielzahl von Veröfentlichungen beschrieben. Ein zu greifender Gegenstand wird mechanisch zwischen Greifelementen eingeklemmt und kann dann, z. B. gehaltert oder an einen anderen Ort transportiert werden. Greifelemente zum Greifen mikroskopisch kleiner Objekte stellen hohe Anforderungen an die feinmechanische Präzision.

## Stand der Technik

Neben mechanischen Greifelementen werden häufig elektromagnetische Elemente eingesetzt. Das Objekt wird durch magnetische Kräfte gehaltert, die beispielsweise mit Hilfe einer elektromagnetischen Spule erzeugt werden. Solche Greifvorrichtungen kommen zwar ohne mechanische Elemente auch, sind aber nur bei magnetisierbaren Objekten einsetzbar.

Mechanische Greifvorrichtungen weisen Greifelemente auf, die entweder verschiebbar (Greifbacken) oder in sich gelenkig (Greiffinger) sein müssen und eine mechanische oder elektromechanische Antriebsvorrichtung benötigen. Solche Greifvorrichtung sind einem mechanischen Verschleiß unterworfen.

Außerdem bedürfen mechanische Greifelemente einer Schmierung, sie sind deshalb unter Reinstraum- und Vakuumbedingungen nur begrenzt anwendbar.

Aus der Schrift IBM Technical Disclosure Bulletin (Vol. 25, No. 8, 1983, S. 4443) ist eine Greifvorrichtung bekannt, bei welcher ein Greifarm aus Bimetall gefertigt ist. bei geeigneter Temperaturänderung verbiegt sich dieser Greifarm in Richtung eines festen Greifarmes und klemmt dadurch ein zu greifendes Objekt zwischen den beiden Greifarmen ein.

Allen beschriebenen Greifvorrichtungen sind für das Greifen mikroskopischer Objekte Grenzen gesetzt, da die zu ihrer Herstellung notwendigen feinmechanischen Verfahren mit zunehmender Miniaturisierung immer komplizierter werden, und mit hohen Kosten verbunden sind.

## Darstellung der Erfindung

Aufgabe der Erfindung ist es, eine einfache Greifvorrichtung anzugeben, die unter Umgehung von aufwendigen feinmechanischen Verfahren herstellbar und zum Greifen mikroskopisch kleiner Objekte (µm-Bereich) geeignet ist.

Diese Aufgabe wird erfindungsgemäß dadurch gelöst, daß die Greifvorrichtung eine Kombination folgender Merkmale aufweist:

- der Grundkörper besteht aus einem oder mehreren Halbleiter-Chips,
- die Zungen sind jeweils aus dünnen Schichten zusammengesetzt, die mit Hilfe von Abscheide- oder Aufdampfprozessen hergestellt sind,
- die Zungen sind zur Temperaturänderung mit schichtförmigen Heizelementen ausgestattet, die auf oder zwischen den Schichten der Zungen angebracht sind.

Vorteilhafte Ausgestaltungen der Erfindung sind in den Unteransprüchen gekennzeichnet.

Selbstverständlich kann die Greifvorrichtung in verschiedenen Größen hergestellt werden. Da sie ohne mechanische Antriebsvorrichtungen auskommt, eignet sie sich besonders zur Miniaturisierung. Sie kommt damit dem Bedarf an immer kleineren Handhabungssystemen entgegen, der mit der Ausbreitung der Mikrotechnologie zunimmt. Während der Miniaturisierung bekannter Greifvorrichtungen die Grenzen der feinmechanischen Fertigungsmethoden gesetzt sind, kann die erfindungsgemäße Greifvorrichtung in Dimensionen von einigen hundert Mikrometern mit den Methoden der Mikrostrukturtechnik hergestellt werden.

Nach Anspruch 2 sind die zur Erwärmung dienenden Heizelemente als elektrische Widerstände ausgebildet und zwischen oder auf den Schichten der Zungen angeordnet. Als Ausgangsmaterial für den Grundkörper der Greifvorrichtung finden nach Anspruch 3 Silizium-Wafer Anwendung, die in der Mikroelektronik weite Verbreitung gefunden haben.

Um die Bewegung der Zungen mit möglichst geringer Heizleistung zu bewerkstelligen, bestehen die Zungen nach Anspruch 4 aus einer Kombination von Materialien mit möglichst unterschiedlichen thermischen Ausdehnungskoeffizienten. Durch die Verwendung einer Siliziumverbindung (z.B. Siliziumnitrit oder Siliziumdioxid) finden bei der Herstellung besonders klein dimensionierter Greifvorrichtungen die Verfahren der Mikrostrukturtechnik Anwendung.

Um die Greifelemente in einer vorgebbaren Lage positionieren zu können und um Einflüsse der Umgebungstemperatur auf die Position der Greifelemente zu vermeiden, ist in Anspruch 5 eine besonders günstige Anordnung gekennzeichnet, bei welcher zur Erfassung der momentanen Position und zur Positionsregelung Sensorelemente auf den Zungen angebracht sind. Die Funktion der Sensorelemente kann auf verschiedenen physikalischen Effekten beruhen. Die Verwendung von Piezowiderständen ist besonders vorteilhaft, da der statische piezoresistive Effekt bei Silizium besonders gut ausgeprägt ist, und die Position der Zungen unmittelbar über die Messung der Zug- oder Druckbelastung bestimmt werden kann. Ein weiterer Vorzug liegt darin, daß Piezowiderstände einfach mit Hilfe der in der Mikroelektronik üblichen Techniken herstellbar sind.

Nach Anspruch 6 werden Heizer- und Sensorsignale in gemeinsamen Regelkreisen miteinander verknüpft, wodurch die Zungen beispielsweise durch Regelung der Heizleistung in vorgebbaren Positionen gehalten werden können. Damit lassen sich sowohl die Bewegung zweier korrespondierender Zungen koordinieren als auch die mehrerer Greifelemente, wodurch die Handhabung größerer und komplexerer Objekte gewährleistet wird. Der Aufbau und die Wirkungsweise der einzelnen Greifelemente entspricht dem des steuerbaren positionsveränderlichen Elementes, das in der unveröffentlichten deutschen Patentanmeldung DE 38 09 597.1 beschrieben ist. Um einen besonders hohen Grad an Miniaturisierung zu erreichen, sind nach Anspruch 7 die Regelkreise und die Greifvorrichtungen jeweils auf demselben Halbleiterchip integriert. Dadurch können Greifvorrichtungen mit mehreren identischen Zungen oder auch mehrere identische Greifvorrichtungen gleichzeitig hergestellt werden.

Eine vorteilhafte Ausführungsform ist in Anspruch 8 gekennzeichnet. Der Grundkörper besteht aus zwei Silizium-Chips, die jeweils eine Zunge tragen und über eine bestandsplatte miteinander verbunden sind. Durch die Stärke der Abstandsplatte kann die Greifvorrichtung der Größe der zu bewegenden Objekte angepaßt werden.

Die Ausgestaltung nach Anspruch 9 zeichnet sich durch einen besonders einfachen Aufbau aus. Am Grundkörper, der aus nur einem Silizium-Chip besteht, sind drei Zungen angebracht, die durch geeignete Steuerung das zu bewegende Objekt fassen.

Alle gekennzeichneten Weiterbildungen der Erfindung werden nach Anspruch 10 vorteilhaft mit den in der Mikromechanik und in der Mikroelektronik bekannten Verfahren hergestellt und sind mit Standard-IC-Prozessen kompatibel. Die einzelnen Bestandteile werden dabei mit Hilfe planarer Lithographieprozesse strukturiert. Für den Betrieb einer Greifvorrichtung reichen die in der Mikroelektronik üblichen Spannungspegel aus.

Die erfindungsgemäße Greifvorrichtung und ihre Weiterbildungen zeichnen sich durch einen hohen Grad an Miniaturisierung, hohe Genauigkeit, große Zuverlässigkeit und niedrige Kosten aus. Der extreme Grad an Miniaturisierung erlaubt den Einsatz bei der Handhabung mikroskopischer Objekte, z.B. bei der Bearbeitung und Analyse von Objekten in der Mikrotechnologie oder in der Mikrobiologie. Die Greifvorrichtung eignet sich besonders für die Handhabung solcher Objekte in abgeschlossenen Systemen, bei welchen mechanische Durchführungen vermieden werden müssen, beispielsweise in Ultrahochvakuum-Apparaturen.

## Kurze Beschreibung der Zeichnungen

Nachfolgend werden anhand von Zeichnungen zwei Ausführungsbeispiele der Greifvorrichtung dargestellt.

Es zeigen:

Fig. 1 Schematische Darstellung einer Greifvorrichtung, die aus zwei Chips zusammengesetzt ist,

A mit geschlossenen Zungen,

B mit geöffneten Zungen,

Fig. 2 Schematische Darstellung einer Greifvorrichtung, die aus einem Chip aufgebaut ist,

A Seitenansicht

B Aufsicht.

## Wege zur Ausführung der Erfindung

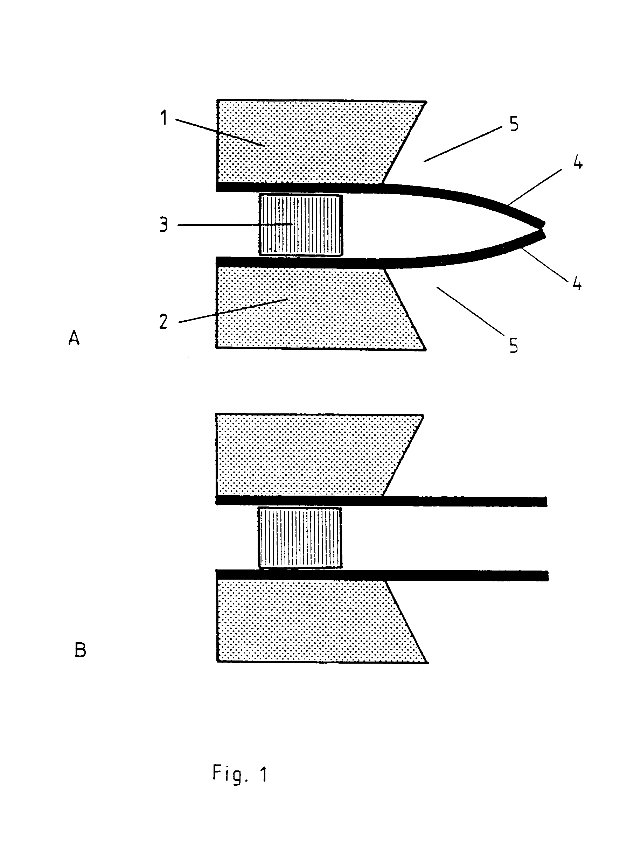

Der Grundkörper der Greifvorrichtung in Fig. 1 A besteht aus zwei einkristallinen Silizium-Chips 1, 2 (z.B. 100-Orientierung, Dicke ca. 0,5 mm), die über eine Abstandsplatte 3 verbunden sind. Die Abstandsplatte, die aus Silizium oder Glas hergestellt werden kann, wird beispielsweise mit einer Klebetechnik mit den Silizium-Chips verbunden. Ihre Dicke wird auf die Größe der zu greifenden Objekte abgestimmt und beträgt zwischen einigen Mikrometern bis zu einigen Millimetern. Zur Herstellung der Zungen 4 (Länge bis zu einigen hundert Mikrometern wird auf einer Oberfläche des Silizium-Chips eine Siliziumschicht abgeschieden. Als zweite Schicht wird darüber eine Metallschicht (vorzugsweise Gold) aufgedampft. Durch Lithographieprozesse wird die Geometrie der Zungen strukturiert, die anschließend unter Zuhilfenahme anisotroper Ätzschritte unter bildung von Ätzgruben 5 einseitig freigelegt werden.

Die Metallschicht kann durch eine geeignete Aufdampftechnik so aufgebracht werden, daß sie eine Zugspannung auf die Siliziumschicht ausübt, und die Zungen 4 im Ruhestand (ohne Energieeinspeisung) aus den Ätzgruben herausragen (Fig 1A). Wenn die beiden Chips mit den Zungen spiegelsymmetrisch bezüglich der bestandsplatte angebracht sind, kann erreicht werden, daß die Greifvorrichtung im Ruhezustand geschlossen ist.

Durch Einspeisen thermischer Energie werden die Zungen aufgrund der Bimaterialstruktur derart gebogen, daß die Greifvorrichtung in den geöffneten Zustand übergeht (Fig. 1B). Mit Hilfe von Sensorelementen können die Zungen in einer vorgebbaren Lage positioniert werden, wodurch die Größe der Öffnung und die Kraft, mit der das Objekt gehalten wird, bestimmt werden.

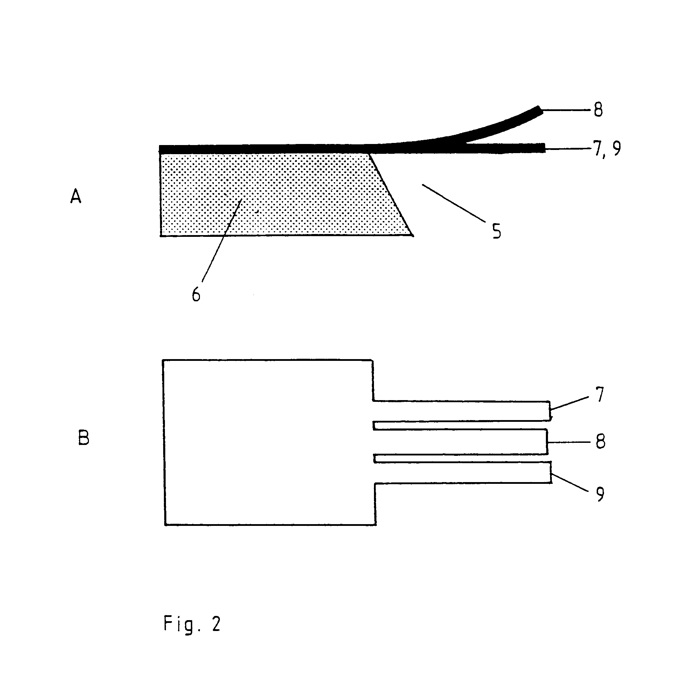

In Fig. 2 ist ein besonders einfach aufgebautes Ausführungsbeispiel in Seitenansicht (Fig. 2A) und Aufsicht (Fig. 2B) dargestellt. Die Greifvorrichtung ist aus nur einem Chip 6 und drei parallel liegenden Zungen 7, 8, 9 aufgebaut. Im einfachsten Fall ist die mittlere Zunge 8 aus zwei Schichten aufgebaut, während die Zungen 7 und 8 aus nur einer Schicht aus Silizium oder einer Siliziumverbindung bestehen. Durch die Bewegung der Bimaterial-Zunge 8 relativ zu den Zungen 7 und 9 kann ein Objekt gehalten bzw. gelöst werden. Werden alle drei Zungen aus bimaterial aufgebaut und einzeln angesteuert, erhöht sich die Flexibilität der Greifvorrichtung. Beispielsweise kann damit ein Objekt gedreht werden, indem die drei Zungen so ausgelenkt werden, daß ihre losen Enden annähernd in einer Ebene liegen, die gegenüber der Oberfläche des Grundkörpers geneigt ist.

## Patentansprüche

1. Greifvorrichtung mit einem Grundkörper (1,2 oder 6) und Greifelementen, wobei die Greifelemente als einseitig am Grundkörper angebrachte Zungen (4) ausgebildet sind, die aus übereinander angeordneten Schichten verschiedener Materialien mit unterschiedlicher thermischer Ausdehnung bestehen, **gekennzeichnet** durch folgende Merkmale:
   - der Grundkörper (1,2,6) besteht aus einem oder mehreren Halbleiterchips,
   - die Zungen (4,7,8,9) sind jeweils aus dünnen Schichten zusammengesetzt, die mit Hilfe von Abscheide- oder Aufdampfprozessen hergestellt sind,
   - die Zungen (4,7,8,9) sind zur Temperaturänderung mit schichtförmigen Heizelementen ausgestattet, die auf oder zwischen den Schichten der Zungen angebracht sind.

2. Greifvorrichtung nach Anspruch 1, dadurch **gekennzeichnet**, daß die Heizelemente als elektrische Widerstände ausgebildet sind.

3. Greifvorrichtung nach einem der Ansprüche 1 und 2, dadurch **gekennzeichnet**, daß als Ausgangsmaterial für den Grundkörper ein Silizium-Wafer herangezogen wird.

4. Greifvorrichtung nach einem der Ansprüche 1 bis 3, dadurch **gekennzeichnet**, daß die Zungen (4,7,8,9) jeweils aus einer Schicht aus Silizium oder einer Siliziumverbindung und einer Metallschicht bestehen.

5. Greifvorrichtung nach den Ansprüchen 1 bis 4, dadurch **gekennzeichnet**, daß an den Zungen zur Positionserfassung und Positionsregelung Sensorelemente angebracht sind, und daß die Sensorelemente als Piezowiderstände ausgebildet sind, oder auf magnetischen, piezoelektrischen, ferroelektrischen oder kapazitiven Effekten beruhen.

6. Greifvorrichtung nach einem der Ansprüche 1 bis 5, dadurch **gekennzeichnet**, daß die Heizelemente und die Sensorelemente über gemeinsame elektrische Regelkreise miteinander verknüpft sind.

7. Greifvorrichtung nach einem der Ansprüche 1 bis 6, dadurch **gekennzeichnet**, daß alle mechanischen und elektrischen Komponenten auf einem Halbleiterchip integriert sind.

8. Greifvorrichtung nach einem der Ansprüche 1 bis 7, dadurch **gekennzeichnet**, daß der Grundkörper (1,2) aus zwei Silizium-Chips besteht, die über eine Abstandsplatte (3) miteinander verbunden sind.

9. Greifvorrichtung nach einem der Ansprüche 1 bis 7, dadurch **gekennzeichnet**, daß der Grundkörper (6) aus nur einem Silizium-Chip besteht, der mit drei Zungen versehen ist, von denen wenigstens eine (8) aus Bimaterial aufgebaut ist.

10. Verfahren zur Herstellung einer Greifvorrichtung gemäß einem der Ansprüche 1 - 9, dadurch **gekennzeichnet**, daß die Strukturen der beweglichen Zungen mit planaren Lithographieprozessen definiert werden, und daß die in der Mikromechanik bekannten Verfahren, wie epitaktische Abscheidung, Ätzen mit definiertem Ätzstop und unisotropes Ätzen angewendet werden.

## Claims

1. Gripping device comprising a base body (1, 2 or 6) and gripper elements, wherein the gripper elements are formed as blades (4) mounted on one side on said base body, which blades consist of stacked layers of different materials having different coefficients of thermal expansion, **characterized** by the following features:
   - the base body (1, 2, 6) consist of one or several semiconductor chips,
   - the blades (4, 7, 8, 9) are each composed of thin layers produced by means of depositing or vapour plating processes,
   - the blades (4, 7, 8, 9) are provided with lamination-type heating elements attached on or between the laminations of the blades, for temperature variation.

2. Gripping device according to Claim 1,
**characterized** in that said heating elements are designed in the form of electrical resistors.

3. Gripping device according to any of Claims 1 and 2,
**characterized** in that a silicon wafer is used as original material for the base body.

4. Gripping device according to any of Claims 1 to 3,
**characterized** in that said blades (4, 7, 8, 9) each consist of a layer of silicon or a silicon compound and a metal layer.

5. Gripping device according to any of Claims 1 to 4,
**characterized** in that sensor elements are provided on said blades for positional detection and adjustment, and that said sensor elements are designed as piezo resistors or are based on magnetic, piezoelectric, ferroelectric or capacitive effects.

6. Gripping device according to any of Claims 1 to 5,
**characterized** in that said heating elements and said sensor elements are combined with each other by common electrical control loops.

7. Gripping device according to any Claims 1 to 6,
**characterized** in that all mechanical and electrical elements are integrated on a semiconductor chip.

8. Gripping device according to any of Claims 1 to 7,
**characterized** in that said base body (1, 2) consists of two silicon chips which are interlinked by a spacer plate (3).

9. Gripping device according to any of Claims 1 to 7,
**characterized** in that said base body (6) consists of a single silicon chip provided with three blades whereof at least one (8) is composed of bi-material.

10. Method of manufacturing a gripping device according to any of Claims 1 to 9,
**characterized** in that the structures of said mobile blades are defined by processes of planar lithography, and that the processes common in micro-mechanics such as epitactical deposition, etching with defined etching stop and anisotropic etching are applied.

**Revendications**

1. Dispositif de préhension comprenant un corps de base (1, 2 ou 6) et des éléments de prise, dans lequel les éléments de prise sont prévus sous forme de lames (4) montées sur un côté dudit corps de base, lesdites lames étant formées par couches superposées en matières différentes aux coefficients de dilatation thermique différents,
**caractérisé** par les attributs suivants:
  - le corps de base (1, 2, 6) est composé d'un ou plusieurs chips semiconducteurs,
  - chacune des lames (4, 7, 8, 9) est composée de couches minces produites au moyen des procédés de dépôt ou d'enduction à vapeur ou sous vide,
  - les lames (4, 7, 8, 9) sont pourvues des éléments de chauffage laminés qui sont fixés sur ou entre les couches des lames peur varier la température.

2. Dispositif de préhension selon la revendication 1,
**caractérisé** en ce que lesdits éléments de chauffage sont prévus sous forme de résisteurs électriques.

3. Dispositif de préhension selon une quelconque des revendications 1 à 2,
**caractérisé** en ce qu'on utilise une galette en silicium comme matière première pour le corps de base.

4. Dispositif de préhension selon une quelconque des revendications 1 à 3,
**caractérisé** en ce que chacune desdites lames (4, 7, 8, 9) est composée d'une couche en silicium ou d'un composé de silicium, et d'une couche métallique.

5. Dispositif de préhension selon une quelconque des revendications 1 à 4,
**caractérisé** en ce que des éléments détecteurs sont disposés sur lesdites lames pour détecter et régler leur position, et en ce que lesdits éléments détecteurs sont prévus sous forme de piézorésisteurs ou sont à base des effets magnétiques, piézoélectriques, ferro-électriques ou capacitifs.

6. Dispositif de préhension selon une quelconque des revendications 1 à 5,
**caractérisé** en ce que que lesdits éléments de chauffage et lesdits éléments détecteurs sont combinés les uns avec les autre au moyen de circuit de réglage communs.

7. Dispositif de préhension selon une quelconque des revendications 1 à 6,
**caractérisé** en ce que tous les éléments mécaniques et électriques sont intégrés sur un chip semiconducteur.

8. Dispositif de préhension selon une quelconque des revendications 1 à 7, **caractérisé** en ce que ledit corps de base (1, 2) est constitué par deux chips en silicium qui sont reliés l'un avec l'autre par une plaque de distance (3).

9. Dispositif de préhension selon une quelconque des revendications 1 à 7, **caractérisé** en ce que ledit corps de base (6) est constitué par un seul chip en silicium qui est pourvu de trois lames dont au moins une (8) est composé d'une bi-matière.

10. Procédé de fabriquer un dispositif de préhension selon une quelconque des revendications 1 à 9, **caractérisé** en ce que les structures desdites lames mobiles sont définies par des procédés de lithographie planaire, et en ce que les procédés courants dans la micro-mécanique, p.e. dépôt épitaxial, gravure à arrêt de gravure défini, et gravure anisotrope, sont appliqués.

Fig. 1

Fig. 2